# EUROPEAN PATENT SPECIFICATION

(11) **EP 2 789 508 B1**
(45) Date of publication and mention of the grant of the patent: **05.10.2016**
(21) Application number: 14163733.0
(22) Date of filing: 07.04.2014
(51) Int. Cl.: B60R 13/00, B60R 13/02

(54) **Vehicle luggage board & vehicle including a luggage storage space**
Fahrzeuggepäckablage und Fahrzeug mit einem Gepäckstauraum
Plateau de bagages pour véhicule et véhicule comprenant un espace de rangement de bagages

(30) Priority: 09.04.2013 GB 201306370
(43) Date of publication of application: 15.10.2014
(73) Proprietor: Nissan Motor Manufacturing (UK) Ltd., Cranfield Bedfordshire MK43 0DB (GB)
(72) Inventor: Hockaday, Peter, Cranfield, Bedfordshire MK430DB (GB)

(56) References cited:
- JP-A- 2009 292 196

## Description

The present invention relates to a vehicle including a luggage storage space, which in turn includes a luggage board.

Some vehicles, for example some cars, have a luggage storage space that is commonly referred to as a trunk (or boot). The luggage storage space is typically located towards the rear of the vehicle. Some of these vehicles include at least one luggage board, which provides a removable base or floor on which articles of luggage can be loaded. "Luggage" is used in a broad sense to mean any article that can be transported in the storage area, and may include, for example bags, suit cases, shopping, or sports equipment.

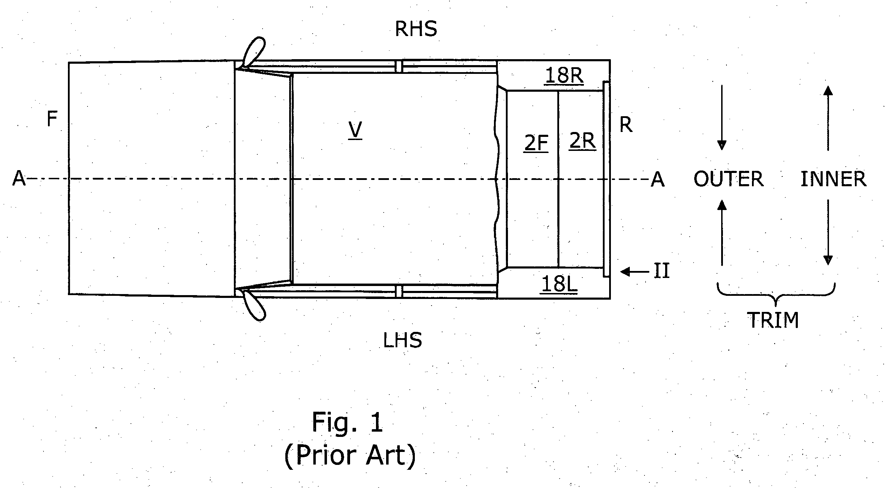

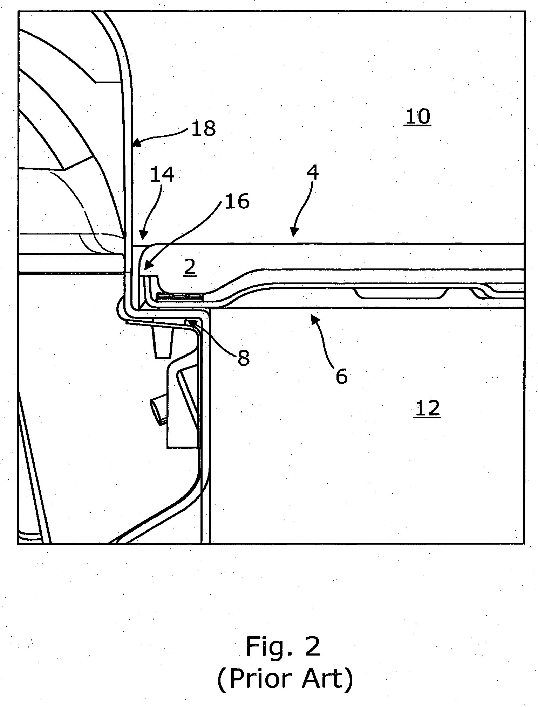

Figure 1 shows a schematic, part cut away plan view of a known vehicle V fitted with luggage boards 2F and 2R, allowing flexible use of the luggage area. Figure 2 shows a known luggage board in a sectional view looking towards the front F of the vehicle along arrow II in Figure 1. Luggage board 2 includes first and second load bearing surfaces 4, 6. The board 2 sits on shelves 8 (only one shown) formed in lateral portions 18 of the vehicle interior trim. The luggage board 2 splits the luggage space into upper and lower portions 10, 12. The lower portion 12 provides a limited space that is typically taken up by a spare wheel and/or vehicle tools, for example a jack and wheelbrace. Typically, the lower space 12 is hidden from the view of a user by the luggage board 2 and other interior trim. The upper portion 10 is the space which is normally visible to the user, which is used to store articles of luggage that can be easily accessed simply by opening the tailgate or boot lid.

The luggage board 2 can be rotated upwards and/or manually removed from the vehicle in order to gain access to the lower portion 12 of the luggage space.

The board 2 is inserted into the boot such that it rests on the shelves 8. The board 2 is sized and shaped such that when it is mounted on the shelves 8, there are clearance gaps 14 between the edges 16 of the luggage board and lateral trim elements 18. These clearances 14 are necessary to allow for tolerance stack up during vehicle manufacture. However, a problem with this arrangement is that the clearances 14 enable the board 2 to move laterally and/or vertically during operation of the vehicle, which can cause knocking noises. The noises may be heard by occupants of the vehicle, which is clearly undesirable. JP 2009 292196A discloses a vehicle according to the preamble of claim 1.

Accordingly, the present invention seeks to mitigate at least one of the above-mentioned problems, or to at least provide an alternative vehicle including a luggage space and luggage board.

According to one aspect of the invention, there is provided a vehicle including a luggage storage space, said storage space including a luggage board; a first trim element that is arranged to cover at least a portion of a first lateral side of the vehicle; and a second trim element that is arranged to cover at least a portion of a second lateral side of the vehicle, said luggage board including a first load bearing surface and a first edge, the first load bearing surface being arranged to provide an area on which articles of luggage can be placed; said first trim element comprising a first protruding formation arranged to engage with the first edge of the luggage board when the luggage board is located in the vehicle in its regular position; and said second trim element comprising a second protruding formation arranged to engage with a second edge of the luggage board when the luggage board is located in the vehicle in its regular position; wherein the luggage board and the first and second trim elements are arranged such that there is an interference fit between the luggage board and the first protruding formation, and between the luggage board and the second protruding formation, when the luggage board is located in the vehicle in its regular position;
characterized in that: at least one of the first and second protruding formations is deformable, and preferably resiliently deformable; and in that at least one of the first and second protruding formations includes a skin, with a cavity located behind the skin. Advantageously, the skin of the at least one of the first and second protruding formations includes a moulded textile skin.

Advantageously, the first edge of the luggage board is profiled to engage the first protrusion formed in the first trim element when the luggage board is mounted in the vehicle.

The invention is arranged to inhibit movement of the luggage board within the vehicle when the vehicle is moving, by the interaction of the profiled first edge and the first protrusion. In particular, but not exclusively, the invention inhibits at least one of lateral and vertical movement of the luggage board within the vehicle.

Advantageously, the first edge can be a first lateral side of the luggage board.

Advantageously, the first edge can be profiled to include a taper. This reduces the impact of tolerance accumulation because of the way in which the tapered edge interacts with the vehicle trim formation, and therefore obviates the need for lateral clearance gaps. The taper also provides good engagement with the formation in the vehicle trim element. Both of these advantages lead to a reduction in lateral movement of the luggage board relative to the vehicle, thereby reducing impact noise. The taper also provides an improved visual appearance for the luggage space since it is no longer necessary to include clearance gaps to take account of tolerance build up. The clearance gaps can be unsightly, and dirt and dust can accumulate in them.

Advantageously, at least a portion of the first load bearing surface can include a textile covering, such as a carpet. The carpet can comprise a deep piled fabric. The first load bearing surface can include a textile surface that substantially matches the vehicle trim material, and therefore provides an aesthetically pleasing appearance. The textile surface also reduces impact noises, and helps to damp relative vertical movement between the luggage board and the vehicle when the luggage board is oriented in the vehicle such that the first load bearing surface faces downwards. Advantageously, the first load bearing surface can be substantially planar.

At least a portion of the first edge can include a textile, and preferably substantially the entire first edge includes a textile. The textile surface for the first edge can be integral with, or separate from, the textile providing at least a portion of the first load bearing surface. The textile surface of the first edge engages with the textile material of the first vehicle trim element, thereby providing a textile to textile surface engagement. This provides a limited amount of damping; and also provides relatively high grip or frictional engagement between the luggage board and the vehicle trim, which resists relative movement by the interaction of the fibrous materials.

Typically the luggage board includes an inner structure having at least one reinforcing member, for example at least one metallic reinforcing member; and preferably at least one steel reinforcing member. The inner structure can include a honeycomb core. The inner structure can include a plastics and/or resin material, and is preferably made from polypropylene and resin.

The inner structure can include a step adjacent the first edge. For example, the structure adjacent the first edge can include a substantially L-shaped portion when viewed in cross-section. The tapered first edge can be defined by textile stretched over the stepped structure, for example in the manner of a membrane. This arrangement provides the first edge with some flexibility.

Advantageously, the luggage board can include a second load bearing surface. The second load bearing surface is located substantially opposite the first load bearing surface. The second load bearing surface can be substantially planar.

Advantageously, the second load bearing surface can include a wipe clean surface portion. This is typically a non-textile surface, such as a plastics surface, that is easy to clean. For example, the luggage board can include a surface made from polypropylene.

Advantageously, a peripheral portion of the second load bearing surface adjacent to the first edge can include a textile surface. This damps vertical movement between luggage board and vehicle when the luggage board is oriented such that the second load bearing surface is facing downwards.

The textile surface for the first edge can be integral with, or separate from, the textile for the peripheral portion of the second load bearing surface adjacent to the first edge. The or each textile portion on the second load bearing surface helps to damp relative vertical movement between luggage board and vehicle when the luggage board is oriented such that the first load bearing surface faces upwards.

Advantageously, the luggage board can include a second edge that is profiled to engage a second protrusion formed in a second trim element mounted in the vehicle. This inhibits at least one of lateral and vertical movement of the luggage board within the vehicle, when the vehicle is moving.

Advantageously, the second edge can include a second lateral side of the board.

Advantageously, the second edge can include a taper. This has similar advantages to the first tapered edge.

The tapers of the first and second edges can be arranged such that the distance between the first and second edges across the first load bearing surface is greater than the distance between the first and second edges across the second load bearing surface. That is, the first load bearing surface is slightly wider than the second load bearing surface.

Advantageously, at least a portion of the second edge includes a textile, and preferably substantially the entire second edge includes a textile. The textile surface for the second edge can be integral with, or separate from, the textile for the first load bearing surface. The textile surface of the second edge engages with the textile material of a second vehicle trim element, thereby providing a textile to textile surface engagement. This provides a limited amount of damping; and also provides relatively high grip or frictional engagement between the luggage board and the vehicle trim, which resists relative movement by the interaction of the fibrous materials.

The inner structure of the luggage board can include a step adjacent the second edge. For example, the structure adjacent the second edge can include a substantially L-shaped portion when viewed in cross-section. The tapered second edge can be defined by textile stretched over the stepped structure, for example in the manner of a membrane. This arrangement provides the second edge with some flexibility.

Advantageously, a peripheral portion of the second load bearing surface adjacent to the second edge can include a textile. This damps vertical movement between luggage board and vehicle when the luggage board is oriented such that the second load bearing surface is facing downwards.

The textile surface for the second edge can be integral with, or separate from, the textile for the peripheral portion of the second load bearing surface adjacent to the second edge.

Advantageously, the luggage board can include a textile cover that provides the textile surface for the first load bearing surface and for at least one of the following: the first edge and the peripheral portion of the second load bearing surface adjacent the first edge; and the second edge, and the peripheral portion of the second load bearing surface adjacent the second edge. Advantageously the textile material(s) used for covering the luggage board is/are selected to match the vehicle trim material(s).

In preferred embodiments, the luggage board is substantially a block of rectangular cross-sections, and includes the first and second load bearing surfaces and four edges, which comprise: first and second lateral edges, a front edge and a rear edge.

According to another aspect of the invention, there is provided a vehicle including a luggage storage space, said storage space including a first trim element that is arranged to cover at least a portion of a first lateral side of the vehicle; characterized in that said first trim element comprises a first protruding formation arranged to engage with a first edge of a luggage board. The first lateral side can include, for example, at least one of a first side wall of the vehicle, a wheel arch structure, and a fuel filler pipe.

The invention is arranged to inhibit movement of the luggage board within the vehicle when the vehicle is moving, by the interaction of the profiled first edge and the first protrusion. In particular, but not exclusively, the invention inhibits at least one of lateral and vertical movement of the luggage board within the vehicle.

The second lateral side can include, for example, at least one of a second side wall of the vehicle, a wheel arch structure, and a fuel filler pipe.

Typically, the second trim element is arranged substantially opposite to the first trim element. At least a part of the luggage space is located between the first and second trim elements.

Advantageously, at least one of the first and second protruding formations can be elongate. For example, at least one of the first and second protruding formations can be arranged in the form of an elongate bulge, such as a rib.

Advantageously, at least one of the first and second protruding formations can be arranged substantially horizontally in the vehicle. This helps to ensure that the protrusions are arranged in the plane of the luggage board.

Advantageously, at least one of the first and second protruding formations is arranged substantially parallel to a longitudinal axis of the vehicle. This provides a good contact surface area with the luggage board.

Advantageously, the first protruding formation can be arranged substantially parallel with the second protruding formation. This helps to ensure that the protrusions are arranged in the plane of the luggage board; and assists in allowing the luggage boards to be reversible, if this feature is required.

Advantageously, at least a portion of the first and/or second protruding formation, and preferably substantially the entire first and/or second protruding formation, includes a textile for engaging the luggage board. Preferably substantially the entire outer (visible) surface of each trim element includes a textile.

Advantageously, at least a portion of the first and/or second protruding formation, and preferably substantially the entire first and/or second protruding formation, is flexible. This enables the protrusions to deform when the luggage board is inserted into, and removed from, the vehicle; and when the luggage board is inverted in situ.

Advantageously, the first and/or second protruding formation is more flexible than adjacent portions of the respective trim element. This enables the or each protruding formation to compress more easily when the luggage board is inserted into, or removed from, the trunk.

Advantageously, at least one portion of the first and/or second trim element includes stiffening means. For example, at least one portion of the first and/or second trim element includes a stiffening layer, such as a foam backing layer. The stiffening layer can be attached to the textile or can be formed integrally therewith. The stiffening layer can be moulded with the textile layer. Thus for at least one of the first and second trim elements, the thickness of the trim element at the protruding formation is less than the thickness of adjacent portions of the respective trim element. Typically, the thickness of the trim element is substantially constant, except for the protruding formation; where the thickness is reduced to increase its flexibility relative to the remainder of the trim element.

Advantageously, at least one of the first and second protruding formations includes a curved outer surface; and preferably includes a convex portion.

Advantageously, at least one of the first and second protruding formations can include a moulded textile skin, and includes a cavity located behind the skin.

The first and/or second edges of the luggage board may also include a moulded or stretched textile skin, with a cavity located behind the skin.

Typically, the depth of the protruding formation is approximately equal to the depth of the luggage board.

Preferably, the length of the first protruding formation is substantially equal to the distance between front and rear edges of the luggage board.

Advantageously, the first protruding formation can be arranged substantially parallel with the first edge of the luggage board. This helps to ensure good contact between the first edge and the first protrusion.

Advantageously, the second protruding formation can be arranged substantially parallel with the second edge of the luggage board. This helps to ensure good contact between the second edge and the second protrusion.

Advantageously, the orientation of the luggage board is reversible. The luggage board can be oriented in the vehicle such that in a first condition, the first load bearing surface faces upwards. The luggage board can also be oriented in the vehicle such that in a second condition, the second load bearing surface faces upwards.

According to another aspect of the invention, there is provided a vehicle including a luggage storage space, said vehicle including a luggage board, and a first trim element that is arranged to cover at least a portion of a first lateral side of the vehicle, said first trim element having a first protruding formation arranged to engage with at least one side of the luggage board, a second trim element that is arranged to cover at least a portion of a second lateral side of the vehicle, said second trim element having a second protruding formation arranged to engage with at least one side of the luggage board, wherein the luggage board and first and second trim elements are arranged such that the first and second protruding formations engage the luggage board when the luggage board is mounted in the vehicle in its regular position. That is, there is an interference fit between the first protrusion and the luggage board, and between the second protrusion and the luggage board. The luggage board can be arranged according to any configuration described herein. The first trim element can be arranged according to any configuration described herein. The second trim element can be arranged according to any configuration described herein.

An embodiment of the invention will now be described, by way of example only, with reference to the drawings, in which:
Figure 1 shows a schematic, part cut away plan view of a vehicle fitted with prior art luggage boards;
Figure 2 is a partial sectional view of a prior art luggage board located within a vehicle;
Figure 3 is a plan view of a luggage board in accordance with the first aspect of the invention;
Figure 4 is a partial sectional view of the luggage board of Figure 3, carpet side up;
Figure 5 is a partial sectional view of the luggage board similar to Figure 4, but showing the opposed lateral edge of the board; and
Figure 6 is a partial sectional view of the luggage board of Figure 3, wipe clean surface up.

Figure 1 shows a vehicle V with a longitudinal centre line A-A, a front end F and a rear end R; a left-hand lateral side LHS and a corresponding right-hand side RHS; front and rear luggage boards 2F and 2R; and left and right interior trim elements 18L and 18R in the boot area. The directions indicated by the terms "outer" and "inner", as applied to trim panels 18, are also shown. ("outer" being a visible surface facing the luggage compartment; and "inner" being a hidden surface facing the vehicle bodyshell)

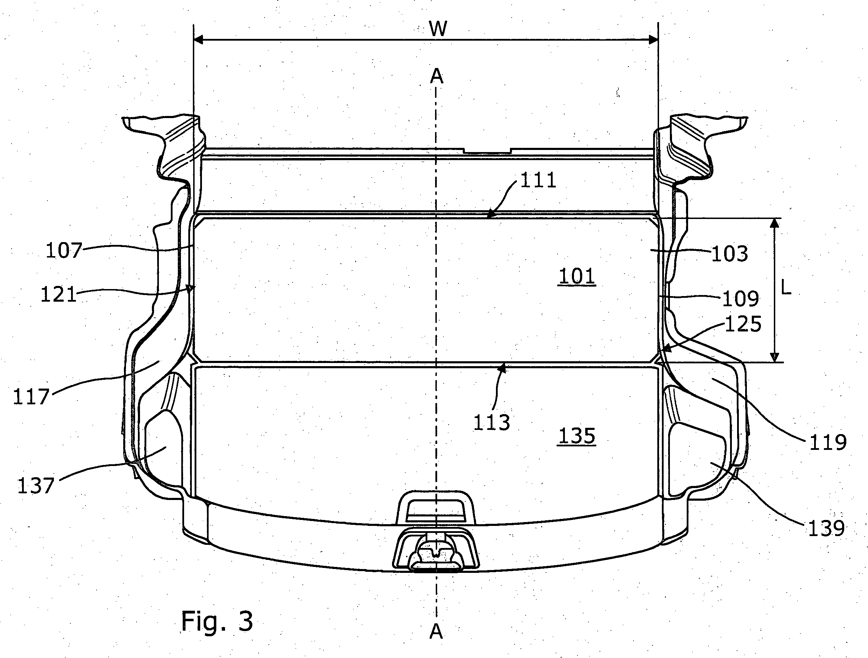

Figures 3 to 6 show a vehicle luggage storage space 129, 131, and a luggage board 101, according to the present invention.

The luggage board 101 is substantially a block of rectangular cross-sections. It includes first and second load bearing surfaces 103, 105 and four edges: first and second lateral edges 107, 109, a front edge 111 and a rear edge 113. The depth D of the luggage board is relatively small compared with the distance L (Figure 3) between the front and rear sides 111, 113; and the distance W (Figure 3) between the first and second lateral sides 107, 109.

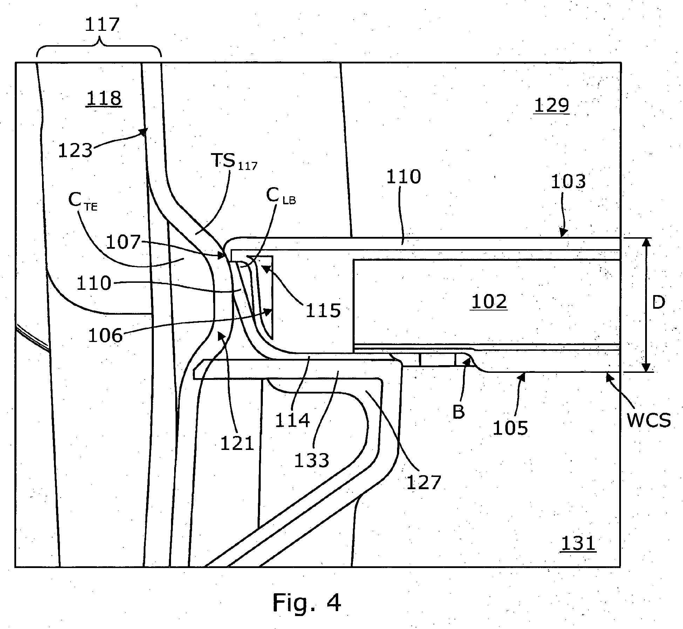

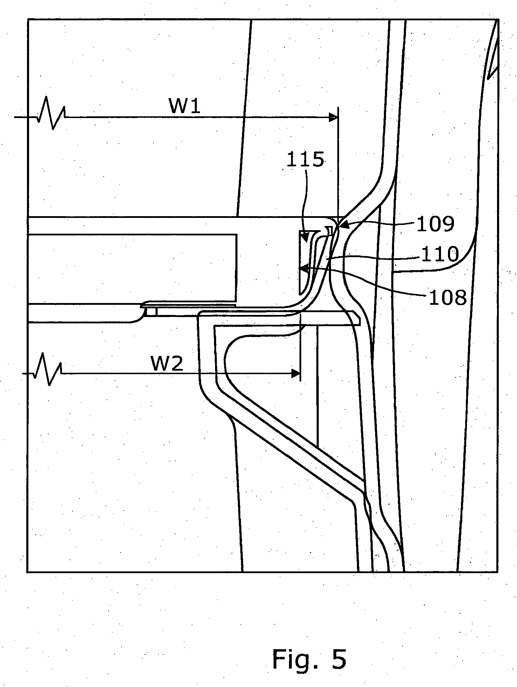

The luggage board 101 includes a plastics inner structure 102 having a honeycomb centre and a reinforcing steel bar (not shown). The body 102 is made from a polypropylene and resin construction. The inner body 102 is stepped (115) in cross-section at the first and second lateral surfaces 106, 108. A textile 110 that substantially matches the textile materials used in the vehicle trim elements, covers the first load bearing surface 103 of structure 102; wraps around the lateral edges 106, 108 of structure 102; and overlaps onto peripheral portions of the second load bearing surface 105 of the structure 102 adjacent to the first and second lateral edges 107, 109. The textile material is typically a carpet such as a deep piled fabric. Thus the first load bearing surface 103 provides a carpeted outer surface. The first and second lateral edges 107, 109 are formed by carpet wrapped over the stepped portions 115 of the inner structure 102, which provide the first and second lateral edges 107, 109 with tapers, and a cavity C_{LB} behind the carpet wrap. The tapered edges 107, 109 slope such that the distance W1 (Figure 5) for the first load bearing surface 103 is slightly greater than the distance W2 (Figure 5) for the second load bearing surface 105. A significant proportion of the second load bearing surface 105 is a plastics surface, which is an easy to clean surface (a so-called wipe clean surface). The border between the wipe clean surface WCS and the carpet is shown as B in Figure 4.

The luggage board 101 is removably mountable within a trunk (or boot) of a vehicle in a reversible manner. When the luggage board 101 is inserted into the trunk, it is mounted on shelves 127. In a first orientation, the first load bearing surface 103 is orientated upwards and the user of the vehicle is presented with a carpeted luggage board 101 which matches the surrounding vehicle trim. In a second orientation, the luggage board 101 is inverted, such that the second load bearing surface 105 is oriented upwards; and the user is presented with the second load bearing surface 105; which mainly comprises a plastic wipe clean surface.

The luggage space within the vehicle trunk is at least in part defined by a first lateral trim element 117, which is mounted on a first side wall of the vehicle; and by a second trim element 119, which is mounted on a second side wall of the vehicle. The first and second trim elements 117, 119 are arranged to cover at least part of the metallic structure of the vehicle, and/or any fuel filler pipes which are located towards the rear of the vehicle.

The first trim element 117 comprises a moulded textile material or skin TS₁₁₇, for example a deep piled fabric, which is a fibrous material. The first trim element 117 includes a first protrusion 121, that is in the form of a rib that is arranged to engage with the first lateral side 107 of the luggage board 101. It can be seen from Figures 3 and 4 that the first protrusion 121 comprises a moulded part of the textile fabric, which makes up the trim element 117. The trim element 117 includes a stiffening layer 118, which typically comprises a layer of foam bonded to the inner side (vehicle structure facing side) 123 of the trim element. However, in the vicinity of the first protrusion 121, there is no backing layer; so the trim element 117 is thinner in the vicinity of the first protrusion 121 than it is at other parts of the trim element 117. This means that the first protrusion 121 is flexible, and more flexible than adjacent areas of the trim element 117 which have the foam backing layer. There is a cavity C_{TE} located in the trim element behind the skin of protrusion 121.

In cross section, the first protrusion 121 has a substantially convex form (see Figures 4 and 5). The rib-like protrusion 121 is elongate and has a length which is approximately equal to the length (distance L, Figure 3) of the first lateral edge 107 of luggage board 101. The first protrusion 121 is arranged substantially parallel with the first lateral side 107.

The second trim element 119 has a similar construction to the first trim element 117, but is opposite handed, that is to say symmetrical, to the first trim element.

The second trim element 119 is mounted on the second side wall of the vehicle. The second trim element 119 includes a second protrusion 125 which has a similar structure to the first protrusion 121. The second protrusion 125 is arranged substantially parallel with the second lateral side 109.

When the first and second trim elements 117, 119 are mounted on their respective vehicle side walls, the first and second protrusions 121, 125 are typically arranged substantially parallel to one another; and are arranged at substantially the same vertical height. Additionally, or alternatively, the first and second protrusions 121, 125 can be arranged substantially parallel with a central longitudinal axis A-A of the vehicle (see Figures 1 and 3).

The luggage board 101 splits the trunk into an upper portion 129 and a lower portion 131 (Figure 4). Articles of luggage are normally loaded onto the upward facing surface of the luggage board (either the first load bearing surface 103 or the second load bearing surface 105). Typically a spare wheel and/or tools are located in the lower part of the trunk 131.

Figures 4 and 5 show the luggage board 101 inserted into the vehicle trunk in an orientation such that the first load bearing surface 103 (carpet side) is facing upwards. It can be seen from the drawing that there is an interference fit between the first protrusion 121 and the first lateral edge 107. There is also an interference fit between the second protrusion 125 (Figures 3 and 5) and the second lateral edge 109. This has the effect of eliminating, or at least substantially reducing, lateral and/or vertical movement of the luggage board 101 with respect to the vehicle, when the vehicle is moving.

The tapered edges 107, 109 are particularly suited for engaging with the protrusions 121, 125 to provide the interference fits.

Since the protrusions 121, 125 are flexible, when the luggage board 101 is inserted into the vehicle, the protrusions resiliently deform to enable the luggage board 101 to be properly located onto the shelves 127, and then to press against the lateral sides 107, 109. Thus there is a textile to textile contact between the luggage board 101 and the trim elements 117, 119, which substantially eliminates, or at least substantially reduces, movement of the luggage board 101 within the trunk. This significantly reduces knocking noises produced by the luggage board when compared with prior art luggage boards.

It can be seen that the shelves 127 include a textile covering 133, which is typically a carpet covering. The textile portions 114 that overlap the second load bearing surface 105 provide a textile-to-textile contact between the luggage board 101 and the shelves 127. This textile-to-textile contact damps any vertical movement that takes place by the luggage board 101. This significantly reduces any noises created by relative movement.

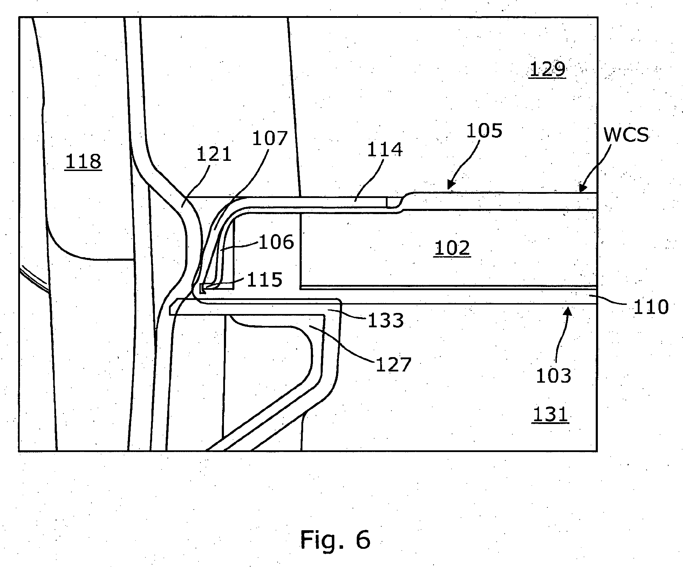

Figure 6 shows the luggage board 101 mounted in the trunk in an orientation such that the second load bearing surface (wipe clean surface) is facing upwards. It can be seen from Figure 6 that there is an interference fit between the first protrusion 121 and the first lateral edge 107. There is a similar interference fit between the second protrusion 125 and the second lateral edge 109. In this arrangement, the interference fit between the protrusions 121, 125 and their respective lateral luggage board sides 107, 109 eliminates, or substantially reduces, the amount of lateral and/or vertical movement of the luggage board 101 when the vehicle is moving, in a similar fashion to the alternative (Figs. 4 and 5) orientation of the luggage board.

Since the protrusions 121, 125 are flexible, when the luggage board 101 is inserted into the vehicle, the protrusions 121, 125 resiliently deform to enable the luggage board 101 to be properly located onto the shelves 127, even when the larger first load bearing surface 103 is seated on the shelves 127. The board must be pressed down past protrusions 121, 125; this gives an "over centre" action, and a positive location thereafter.

It will be appreciated by the skilled person that modifications can be made to the above embodiment which still fall within the scope of the invention. For example, although a single piece of textile is wrapped around the luggage board, separate pieces of textile can be applied to at least some of the first and second load bearing surfaces 103, 105 and first and second lateral edges 107, 109.

Although Figure 3 shows a luggage board arrangement that includes first and second separate luggage boards 101, 135, the first and second luggage boards can be replaced with a single larger luggage board. It will also be appreciated that the first and second luggage boards 101, 135 can be connected together, for example by a hinge device. The arrangement shown in Figure 3 is a convenient arrangement for enabling a user to easily remove the luggage boards 101, 135 from the vehicle. It will also be appreciated that in some vehicles, there may be a larger number of luggage boards, for example at least three luggage boards. The invention is applicable to vehicles that include at least one luggage board, and is also applicable to vehicles that include a plurality of luggage boards.

In Figure 3, the trim elements 117, 119 are moulded to include pockets 137, 139 respectively to accommodate articles, for example tools, fluid containers, walking boots, etc. In vehicles where these pockets are not required, the protrusions 121, 125 can be arranged along substantially the full length of the trim elements 117, 119; and therefore enable them to engage a plurality of luggage boards 101, 135.

## Claims

1. A vehicle (V) including a luggage storage space (129, 131), said storage space including a luggage board (101); a first trim element (117) that is arranged to cover at least a portion of a first lateral side (LHS) of the vehicle; and a second trim element (119) that is arranged to cover at least a portion of a second lateral side (RHS) of the vehicle, said luggage board including a first load bearing surface (103) and a first edge (107), the first load bearing surface being arranged to provide an area on which articles of luggage can be placed;
said first trim element (117) comprising a first protruding formation (121) arranged to engage with the first edge (107) of the luggage board (101) when the luggage board is located in the vehicle in its regular position; and
said second trim element (119) comprising a second protruding formation (125) arranged to engage with a second edge (109) of the luggage board (101) when the luggage board is located in the vehicle in its regular position;
wherein the luggage board (101) and the first and second trim elements (117, 119) are arranged such that there is an interference fit between the luggage board (101) and the first protruding formation (121), and between the luggage board (101) and the second protruding formation (125), when the luggage board is located in the vehicle in its regular position;
**characterized in that**:
at least one of the first and second protruding formations (121, 125) is deformable, and preferably resiliently deformable; and **in that** at least one of the first and second protruding formations (121, 125) includes a skin (TS₁₁₇), with a cavity (C_{TE}) located behind the skin.

2. A vehicle (V) according to claim 1, wherein the skin of the at least one of the first and second protruding formations (121, 125) includes a moulded textile skin (TS₁₁₇).

3. A vehicle (V) according to claim 1 or claim 2, wherein the first edge (107) comprises a first lateral side of the luggage board.

4. A vehicle (V) according to any preceding claim, wherein the first edge (107) of the luggage board (101) is profiled to engage the first protrusion (121) formed in the first trim element (117) when the luggage board (101) is mounted in the vehicle.

5. A vehicle (V) according to claim 4, wherein the first edge (107) is profiled to include a taper.

6. A vehicle (V) according to claim 4, wherein the first edge (107) is curved in a longitudinal cross-section.

7. A vehicle (V) according to any one of the preceding claims, wherein at least a portion of the first load bearing surface (103) includes a textile (110); and wherein at least a portion of the first edge (107) includes a textile.

8. A vehicle (V) according to any one of the preceding claims, including a second load bearing surface (105); and wherein the second load bearing surface includes a wipe clean surface portion (WCS).

9. A vehicle (V) according to claim 8, wherein the first protruding formation (121) is arranged substantially parallel with the second protruding formation (125).

10. A vehicle (V) according to claim 9, wherein the luggage board (101) is reversible in use between first and second orientations, and has an interference fit against the first and second trim elements (117, 119) in both first and second orientations.

11. A vehicle (V) according to any one of the preceding claims, including a second edge (109) that is profiled to engage a second protrusion (125) formed in a second trim element (119).

12. A vehicle (V) according to claim 11, wherein the second edge (109) comprises a second lateral side.

13. A vehicle (V) according to claim 11 or 12, wherein the second edge (109) includes a taper.

14. A vehicle according to any preceding claim, wherein at least one of the first (121) and second (125) protruding formations includes a curved outer surface.

## Patentansprüche

1. Fahrzeug (V), das einen Gepäckaufbewahrungsraum (129, 131) enthält, wobei der Aufbewahrungsraum Folgendes enthält: eine Gepäckablage (101); ein erstes Verkleidungselement (117), das angeordnet ist, wenigstens einen Abschnitt einer ersten lateralen Seite (LHS) des Fahrzeugs abzudecken; und ein zweites Verkleidungselement (119), das angeordnet ist, wenigstens einen Abschnitt einer zweiten lateralen Seite (RHS) des Fahrzeugs abzudecken, wobei die Gepäckablage eine erste lasttragende Oberfläche (103) und eine erste Kante (107) enthält, wobei die erste lasttragende Oberfläche angeordnet ist, eine Fläche bereitzustellen, auf der Gepäcksartikel platziert werden können;
wobei das erste Verkleidungselement (117) eine erste hervorstehende Ausbildung (121) umfasst, die angeordnet ist, mit der ersten Kante (107) der Gepäckablage (101) in Eingriff zu treten, wenn die Gepäckablage sich im Fahrzeug in ihrer normalen Position befindet; und
wobei das zweite Verkleidungselement (119) eine zweite hervorstehende Ausbildung (125) umfasst, die angeordnet ist, mit einer zweiten Kante (109) der Gepäckablage (101) in Eingriff zu treten, wenn die Gepäckablage sich im Fahrzeug in ihrer normalen Position befindet;
wobei die Gepäckablage (101) und das erste und das zweite Verkleidungselement (117, 119) derart angeordnet sind, dass zwischen der Gepäckablage (101) und der ersten hervorstehenden Ausbildung (121) und zwischen der Gepäckablage (101) und der zweiten hervorstehenden Ausbildung (125) eine Presspassung besteht, wenn die Gepäckablage sich im Fahrzeug in ihrer normalen Position befindet;
**dadurch gekennzeichnet, dass**:
die erste und/oder die zweite hervorstehende Ausbildung (121, 125) verformbar und vorzugsweise elastisch verformbar ist; und dass die erste und/oder die zweite hervorstehende Ausbildung (121, 125) eine Haut (TS₁₁₇) enthält, wobei sich hinter der Haut ein Hohlraum (C_{TE}) befindet.

2. Fahrzeug (V) nach Anspruch 1, wobei die Haut der ersten und/oder der zweiten hervorstehenden Ausbildung (121, 125) eine geformte textile Haut (TS₁₁₇) enthält.

3. Fahrzeug (V) nach Anspruch 1 oder 2, wobei die erste Kante (107) eine erste laterale Seite der Gepäckablage umfasst.

4. Fahrzeug (V) nach einem der vorhergehenden Ansprüche, wobei die erste Kante (107) der Gepäckablage (101) profiliert ist, um mit dem ersten Vorsprung (121), der in dem ersten Verkleidungselement (117) ausgebildet ist, in Eingriff zu treten, wenn die Gepäckablage (101) im Fahrzeug befestigt ist.

5. Fahrzeug (V) nach Anspruch 4, wobei die erste Kante (107) profiliert ist, um eine Verjüngung zu enthalten.

6. Fahrzeug (V) nach Anspruch 4, wobei die erste Kante (107) in einem länglichen Querschnitt gekrümmt ist.

7. Fahrzeug (V) nach einem der vorhergehenden Ansprüche, wobei wenigstens ein Abschnitt der ersten lasttragenden Oberfläche (103) eine Textilie (110) enthält; und wobei wenigstens ein Abschnitt der ersten Kante (107) eine Textilie enthält.

8. Fahrzeug (V) nach einem der vorhergehenden Ansprüche, das eine zweite lasttragende Oberfläche (105) enthält; und wobei die zweite lasttragende Oberfläche einen sauber wischbaren Oberflächenabschnitt (wipe clean surface - WCS) enthält.

9. Fahrzeug (V) nach Anspruch 8, wobei die erste hervorstehende Ausbildung (121) im Wesentlichen parallel zu der zweiten hervorstehenden Ausbildung (125) angeordnet ist.

10. Fahrzeug (V) nach Anspruch 9, wobei die Gepäckablage (101) im Gebrauch zwischen einer ersten und einer zweiten Ausrichtung umkehrbar ist und sowohl in einer ersten als auch einer zweiten Ausrichtung eine Presspassung gegen das erste und das zweite Verkleidungselement (117, 119) aufweist.

11. Fahrzeug (V) nach einem der vorhergehenden Ansprüche, das eine zweite Kante (109) enthält, die profiliert ist, um mit einem zweiten Vorsprung (125), der in einem zweiten Verkleidungselement (119) ausgebildet ist, in Eingriff zu treten.

12. Fahrzeug (V) nach Anspruch 11, wobei die zweite Kante (109) eine zweite laterale Seite umfasst.

13. Fahrzeug (V) nach Anspruch 11 oder 12, wobei die zweite Kante (109) eine Verjüngung enthält.

14. Fahrzeug nach einem der vorhergehenden Ansprüche, wobei die erste (121) und/oder die zweite (125) hervorstehende Ausbildung eine gekrümmte Außenoberfläche enthält.

## Revendications

1. Véhicule (V) comportant un espace de rangement de bagages (129, 131), ledit espace de rangement comportant une planche à bagages (101) ; un premier élément de garniture (117) qui est agencé pour couvrir au moins une partie d'un premier côté latéral (LHS) du véhicule ; et un second élément de garniture (119) qui est agencé pour couvrir au moins une partie d'un second côté latéral (RHS) du véhicule, ladite planche à bagages comportant une première surface de charge (103) et un premier bord (107), la première surface de charge étant agencée pour fournir une zone sur laquelle des bagages peuvent être placés ;
ledit premier élément de garniture (117) comprenant une première formation protubérante (121) agencée pour s'enclencher avec le premier bord (107) de la planche à bagages (101) lorsque la planche à bagages est située dans le véhicule dans sa position normale ; et
ledit second élément de garniture (119) comprenant une seconde formation protubérante (125) agencée pour s'enclencher avec un second bord (109) de la planche à bagages (101) lorsque la planche à bagages est située dans le véhicule dans sa position normale ;
dans lequel la planche à bagages (101) et les premier et second éléments de garniture (117, 119) sont agencés de façon à ce qu'il y ait un ajustement serré entre la planche à bagages (101) et la première formation protubérante (121), et entre la planche à bagages (101) et la seconde formation protubérante (125), lorsque la planche à bagages est située dans le véhicule dans sa position normale ;
**caractérisé en ce que** :
au moins l'une des première et seconde formations protubérantes (121, 125) est déformable, et de préférence déformable de façon résiliente ; et **en ce qu'**au moins l'une des première et seconde formations protubérantes (121, 125) comporte un revêtement (TS₁₁₇), avec une cavité (C_{TE}) située derrière le revêtement.

2. Véhicule (V) selon la revendication 1, dans lequel le revêtement de l'au moins une des première et seconde formations protubérantes (121, 125) comporte un revêtement en textile moulé (TS₁₁₇).

3. Véhicule (V) selon la revendication 1 ou la revendication 2, dans lequel le premier bord (107) comprend un premier côté latéral de la planche à bagages.

4. Véhicule (V) selon l'une quelconque des revendications précédentes, dans lequel le premier bord (107) de la planche à bagages (101) est profilé pour enclencher la première protubérance (121) formée dans le premier élément de garniture (117) lorsque la planche à bagages (101) est montée dans le véhicule.

5. Véhicule (V) selon la revendication 4, dans lequel le premier bord (107) est profilé pour comporter un effilement.

6. Véhicule (V) selon la revendication 4, dans lequel le premier bord (107) est incurvé en coupe longitudinale.

7. Véhicule (V) selon l'une quelconque des revendications précédentes, dans lequel au moins une partie de la première surface de charge (103) comporte un textile (110) ; et dans lequel au moins une partie du premier bord (107) comporte un textile.

8. Véhicule (V) selon l'une quelconque des revendications précédentes, comportant une seconde surface de charge (105) ; et dans lequel la seconde surface de charge comporte une partie de surface de nettoyage (WCS).

9. Véhicule (V) selon la revendication 8, dans lequel la première formation protubérante (121) est agencée sensiblement parallèle à la seconde formation protubérante (125).

10. Véhicule (V) selon la revendication 9, dans lequel la planche à bagages (101) est réversible en utilisation entre des première et seconde orientations, et a un ajustement serré contre les premier et second éléments de garniture (117, 119) à la fois dans les première et seconde orientations.

11. Véhicule (V) selon l'une quelconque des revendications précédentes, comportant un second bord (109) qui est profilé pour enclencher une seconde formation protubérante (125) formée dans un second élément de garniture (119).

12. Véhicule (V) selon la revendication 11, dans lequel le second bord (109) comprend un second côté latéral.

13. Véhicule (V) selon la revendication 11 ou 12, dans lequel le second bord (109) comporte un effilement.

14. Véhicule selon l'une quelconque des revendications précédentes, dans lequel au moins l'une des première (121) et seconde (125) formations protubérantes comporte une surface extérieure incurvée.
